# EUROPEAN PATENT SPECIFICATION

(11) **EP 0 553 602 B1**
(45) Date of publication and mention of the grant of the patent: **06.03.1996**
(21) Application number: 92830581.2
(22) Date of filing: 23.10.1992
(51) Int. Cl.: A01D 87/00, A01D 90/08, A01D 87/12

(54) **Apparatus and method for collecting square bales, particulary giant bales of hay and the like**
Vorrichtung und Verfahren zum Laden von rechteckigen Ballen, insbesondere Riesenballen von Heu oder dergleichen
Appareil et méthode de chargement de balles rectangulaires, en particulier de balles de foin géantes ou similaire

(30) Priority: 23.10.1991 IT TO910795
(43) Date of publication of application: 04.08.1993
(73) Proprietor: CONSIGLIO NAZIONALE DELLE RICERCHE, I-00185 Roma (IT)
(72) Inventor: DELMASTRO, Renato, I-14020 ALBUGNANO AT (IT); PALETTO, Giuseppe, TORINO TO (IT); SALVADORE, Guglielmo, CHIERI TO (IT)
(74) Representative: Notaro, Giancarlo

(56) References cited:
- DE-A- 1 657 049
- FR-A- 2 285 801
- FR-A- 2 454 258
- US-A- 3 771 678
- US-A- 4 552 501

## Description

The present invention relates in general to machines for loading and unloading square bales of hay, straw and the like according to the preamble of claim 1. Such a machine is known from DE-A-1657049.

Such machines have the primary function to avoid for the users any fatigue due to the lifting of the bales from the ground, on which they have been placed previously by a baling press, up to a loading platform of a vehicle adapted to transfer such bales to a stocking place, where they are unloaded in order to be preserved up to the moment of their use.

The known machines of the above indicated type are generally able merely to lift the bales, whereas one or more operators above the loading platform of the transport vehicle attend to methodically arranging the loaded bales so that when the loading platform is tilted, the bales are arranged in orderly piles to optimize the room available in the stocking places.

The problem of lifting from the ground and handling the bales is rendered heavier if the bales are of big size. It is here the case, in particular, of giant square bales, which have the shape of a square block having a length of about 240/250 cm, whose rectangular base has sides whose size may be 60X90 cm, 80X80 cm, 90X90 cm, 90X120 cm or 120X120 cm. Because of such huge size, each of such bales may weigh up to 450 Kg, which renders impossible for them to be handled by one or a few operators.

As a rule, such giant square bales are handled by a loading machine which attends to lifting the bales from the ground and load them methodically on the transport vehicle, for example associated with a tractor, the loading machine being independent from the vehicle on which the bales are loaded, thus requiring the use of a suitably adapted mechanical means, as well as of an operator for driving the latter, in addition to the transport vehicle and its driver.

The main object of the present invention is to provide a machine for loading and unloading square bales, particularly giant square bales, adapted to pick up bales from the ground and load such bales on a transport vehicle piling up methodically the bales on the latter, under the control of a single operator.

This object is achieved through a machine for loading and unloading square bales of hay and the like, which machine comprises:
a wheeled vehicle having a supporting frame and a loading platform which is tiltable between a lowered position for receiving the bales and a raised position to unload the loaded bales, said vehicle further having:
pushing means associated with the loading platform for pushing a plurality of loaded bales along a direction parallel to the platform from the loading end of the platform towards the opposite end,
loading means for picking up a bale from the ground and releasing said bale on the platform, said loading means comprising a movable arm having one end articulated to the vehicle frame around a first upright axis which is substantially perpendicular to the platform and a second axis orthogonal to said first axis, and an opposite end carrying a grasping clamp,
driving means for driving said pushing means and said loading means, said driving means being adapted to drive said movable arm so as to cause the same to take in sequence the following positions at any loading cycle:
a first substantially horizontal position for grasping a bale to be loaded, lying on the ground and arranged with its general axis substantially parallel to the longitudinal axis of the vehicle,
a second substantially vertical position, rotated with respect to said first position around said second axis, in which said bale is raised and is parallel with respect to its initial position on the ground,
a third position rotated with respect to said second position around said first axis, in which said bale has an orientation in which its general axis is arranged transversally to the longitudinal axis of the vehicle.

In the preferred embodiment, the movable arm also takes, before unloading the bale, at any loading cycle, a final unloading position rotated with respect to said third position around said second axis, in which the bale is arranged on the vertical of a free loading space.

Due to such features, the machine according to the present invention can grasp and raise the bales, as well as put them on the loading platform in a position suitable to be subsequently unloaded in orderly piles, with the use of a single means driven by a single operator. The loading and unloading operations of the bales are rendered particurarly simple and easy and require a reduced time to be carried out, to the advantage of the overall costs of the operations for collecting hay or forage bales.

The present invention is also directed to a method for loading and unloading square bales according to claim 11. described machine.

Further features and advantages of the invention will become clear from the following detailed description given with reference to the annexed drawings, which are provided purely by way of non limiting example, in which:
figure 1 is a perspective view of a machine for loading and unloading square bales according to the present invention,
figure 2 is an enlarged view of a detail of figure 1 indicated by arrow II,

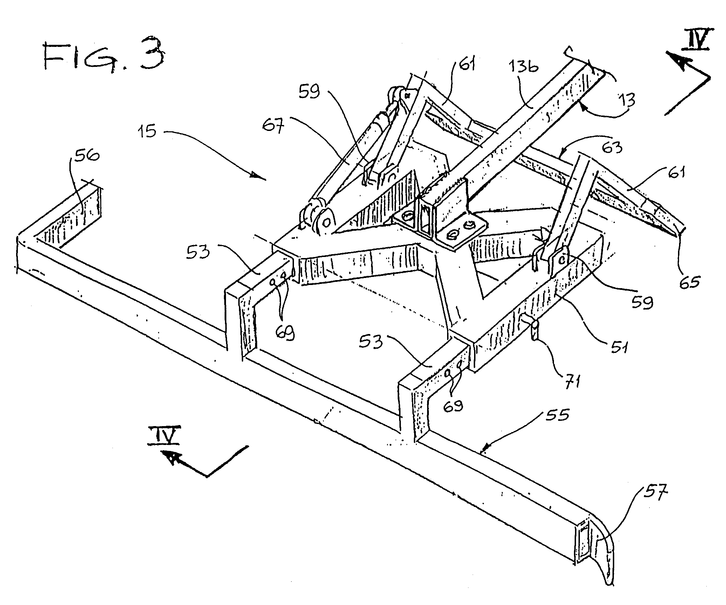

figure 3 is an enlarged perspective view of a detail of figure 1 indicated by arrow III,
figure 4 is an elevational side view of the detail of figure 3, sectioned according to arrows IV - IV, and
figures 5 to 10 are perspective views which show in sequence the various stages of the loading and the following unloading of square bales by a machine according to the present invention.

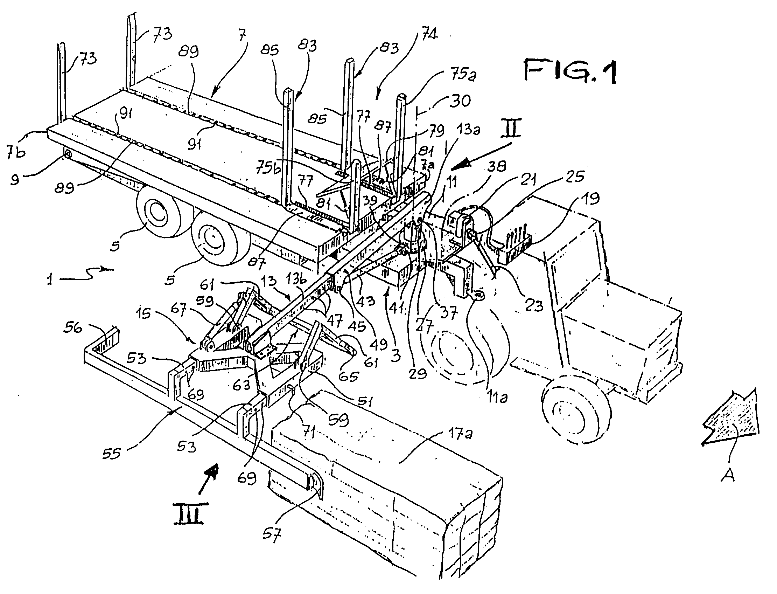

Referring initially to figure 1, a machine is shown therein for picking up square bales, including a trailer generally indicated with reference numeral 1.

The machine comprises a frame 3 movable on two pairs of wheels 5, which pivotally supports, around an axis 9, a platform 7 having a front end 7a and a rear end 7b. The general structure of frame 3 and platform 7 may be of any known type, for example of the type illustrated in European Patent Application EP-0 079 315. In the case of the embodiment illustrated in the annexed drawings, the machine is comprised of a trailer which can be towed by an agricultural tractor (illustrated by dotted lines). However it is apparent that the machine could be provided as a self-propelled machine.

The frame 3 of the trailer comprises a drawbar 11 which has a coupling device 11a for engagement with a cooperating member (not shown) associated with the agricultural tractor.

To the drawbar 11 of the trailer there is articulated a hydraucally operated mechanical arm 13 which comprises two profiled elements 13a and 13b telescopically mounted onto each other, and which carries at its free end a clamp 15 adapted to pick up square bales 17 of hay and the like from the ground and to unload such bales on the platform 7.

A control unit 19, arranged for example on the towing vehicle, drives the functions of a hydraulic pump 21 which is rigidly connected to the drawbar 11 of the trailer in proximity of the articulation of arm 13, to drive the operations of the whole machine, as it will be described with more details in the following. Pump 21 is mechanically driven by taking power from the towing vehicle by means of a shaft 23 connected at one end to the power take-off (not shown) of the agricultural tractor and at its other end to pump 21 by means of a cardan joint 25.

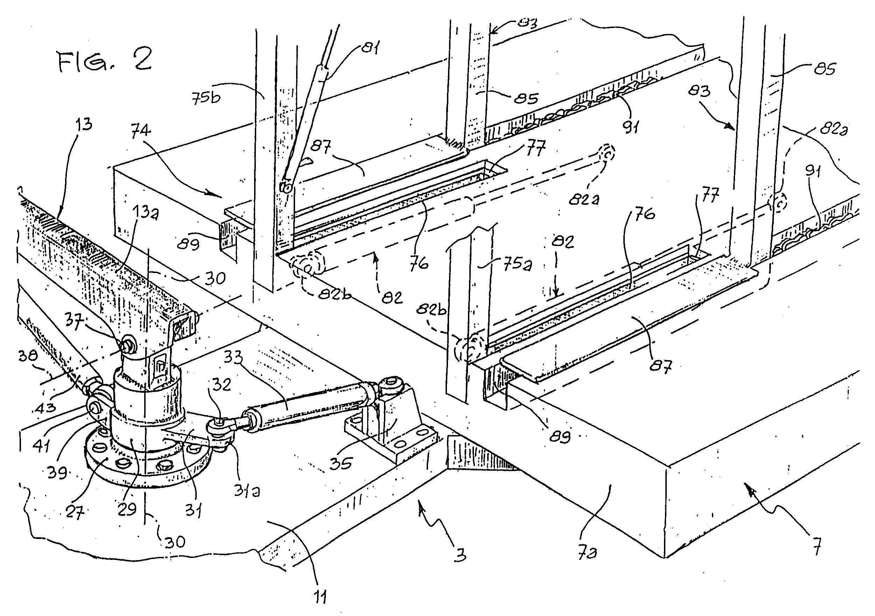

With reference to figures 1 and 2, the articulation of arm 13 comprises a first support element 27 anchored to the frame of trailer 3, on which there is rotatabl mounted, around a vertical axis 30, a turret unit 29. Unit 29 carries on one side a bracket 31 whose end 31a is passed through by a vertical pin 32 on which one end of a hydraulic jack 33 is engaged. The opposite end of jack 33 is articulated on a support 35 anchored to frame 3. In its upper part, unit 29 carries a transverse pin 27 having an axis 38, on which one end of element 13a of arm 13 is articulated.

The unit 29, at a position diametrically opposed to bracket 31, has a fork element 39 through which there is passed a horizontal pin 41 which engages one end of a second hydraulic jack 43 whose other end is engaged by another horizontal pin 45 carried by the first element 13a of arm 13 in proximity to its end which is remote from the articulation pin 37.

The second element 13b of arm 13 has a cross section which is smaller of the first element 13a and is able to slide inside the latter. A series of holes 47 are arranged transversally to element 13b, so that the latter may be fixed in a number of possible alternative positions, by means of a key 49 which engages a hole of first element 13a of arm 13 and one of holes 47 of element 13b. Thus, it is possible to adjust the total length of arm 13 in order to ensure that, as it will be apparent in the following, the bale picked up by clamp 15 cannot interfere with obstacles such as elements of the machine or other previously loaded bales, during the loading movement. Alternatively, there may be provided a jack inside arm 13 in order to drive hydraucally the lengthening or shortening thereof.

At the free end of the second element 13b there is rigidly connected the clamp 15 which comprises a support structure 51 from which square support arms 53 project telescopically, which support a L-shaped abutment element 55. Element 55 is provided with end wings 56 and 57, respectively including a shoulder and a baffle, to favour abutment against the side walls of a bale to be loaded.

Fork elements 59 project from the upper part of structure 51 and have respective pins which carry a tilting jaw 63 operated by a hydraulic jack 67. The jaw 63 comprises two square arms 61 which carry a flat element 65 extending parallel to the L-shaped abutment element 55.

The abutment element 55 is provided in order to adapt itself to different sizes of straw bales to be loaded and its distance from the fixed structure 51 can be adjusted by inserting a key 71 in any hole among a number of holes 69 arranged transversally with respect to arms 53 of element 55.

The platform 7, at its rear end side 7b, adjacent to articulation 9 carries two parallel blades 73 which extend vertically, whose function is to make unloading of the bales from platform 7 easier.

From the opposed end of the platform, i.e. at its front end 7a, there project vertically two uprights 75a and 75b forming part of a pushing device 74. Uprights 75a and 75b comprise element 76 orthogonal thereto which constitute sliding members within slots 77 which extend longitudinally along a portion of the platform adiacent to the front end 7a. To element 76 there are associated respective hydraulic jacks 82 having a first end 82a connected to platform 7 and a second end 82b connected to a pin inserted in a respective element 76, to enable uprights 75a and 75b to be longitudinally moved along platform 7.

To the uprights 75a and 75b there is associated a baffle plate 79, whose function is to address correctly a bale during loading thereof on the platform, the plate 79 being supported by damping stems 81 which are respectively articulated adiacent to the bases of uprights 75a and 75b. each comprise a vertical stem 85 and a respective planar portion 87, orthogonal to stem 85, each slidably supported along a respective guiding track 89 arranged longitudinally on platform 7 and extending throughout the whole length thereof. Inside guiding track 89 there are arranged chains 91 to drive sliding of the support elements 83 along the same.

Alternatively, according to a semplified embodiment, uprights 75a and 75b may be rigidly connected to the end 7a of frame 7 and elements 83 are connected with toothed chains slidable in tracks 89. Such chains are provided with teeth projecting upwardly from the surface of platform 7 to displace the loaded bales from end 7a towards end 7b.

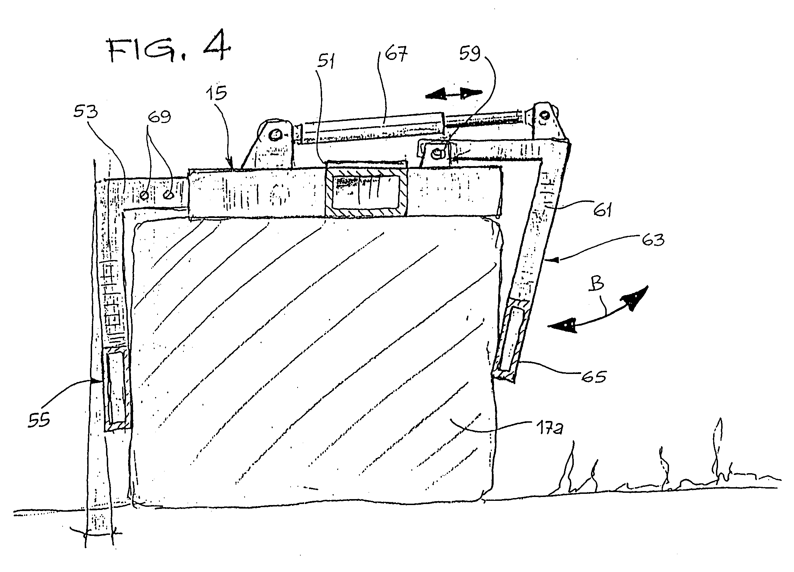

Referring again to figure 1, machine 1 is towed by the tractor in the direction of arrow A along a path on which square bales having their direction of maximum length parallel to direction A have been previously layed down, for example by a baling press. The tractor moves parallel to the longitudinal direction of the bales until clamp 15 is in proximity of one of them. Then, a bale 17a is surrounded by the abutment member 55, correctly addressed by baffle 57, until the rear wall of the bale impinges against shoulder 56. At this moment, jaw 63 of the clamp is driven by jack 67 in order to move the jaw towards the abutment member 55, along the direction indicated by arrow B of figure 4, so as to tightly grasp bale 17a.

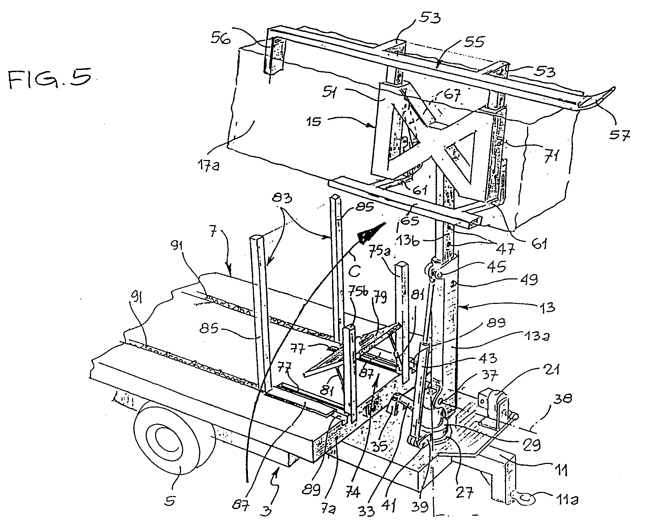

Referring now to figure 5, jack 43 is then extended so as to raise the whole arm 13 and clamp 15 with the bale 17a. In this case, the arm makes a rotation around the axis 38 slightly greater than 90°, as indicated by arrow C of figure 5 reaching a substantially vertical position.

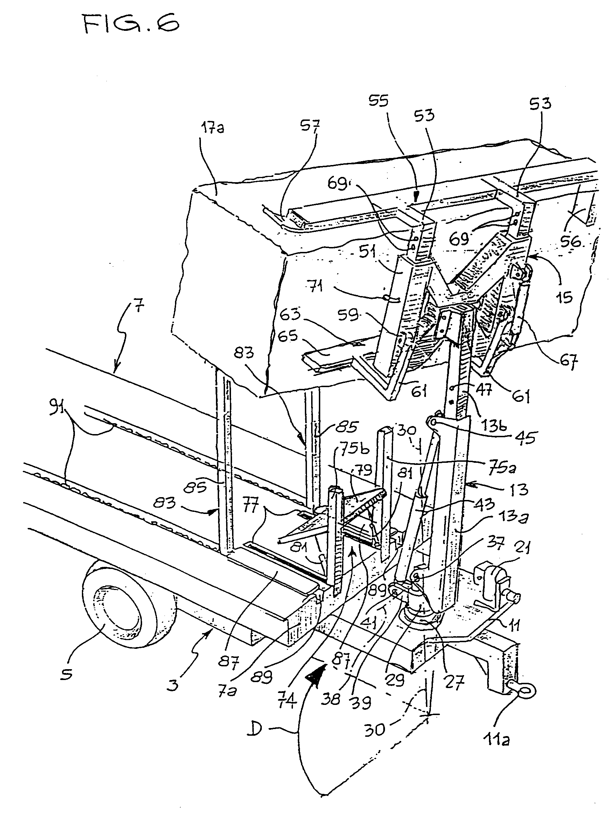

Referring now to figure 6, jack 33 is operated so as to cause the whole arm 13 to rotate of 90° around axis 30, until it brings bale 17a in a position transverse to the platform 7.

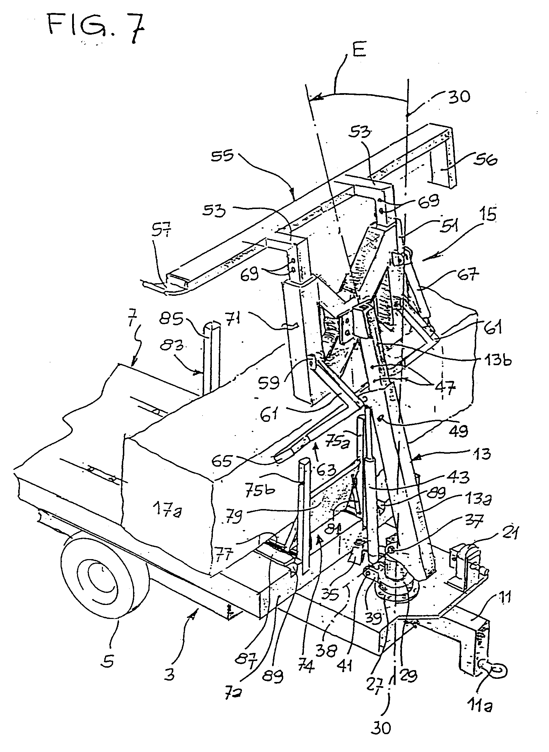

A small rotation of arm 13 around axis 38 in the direction of arrow E figure 7, now takes place, which is obtained by operating jack 43, so that bale 17a is on the vertical of the space free for loading, i.e. above the space between uprights 75a and 75b on one side and between stems 83 on the other side.

At this moment, retraction of jack 67 causes this engagement of jaw 63 from the bale which is then released, for the loading thereof.

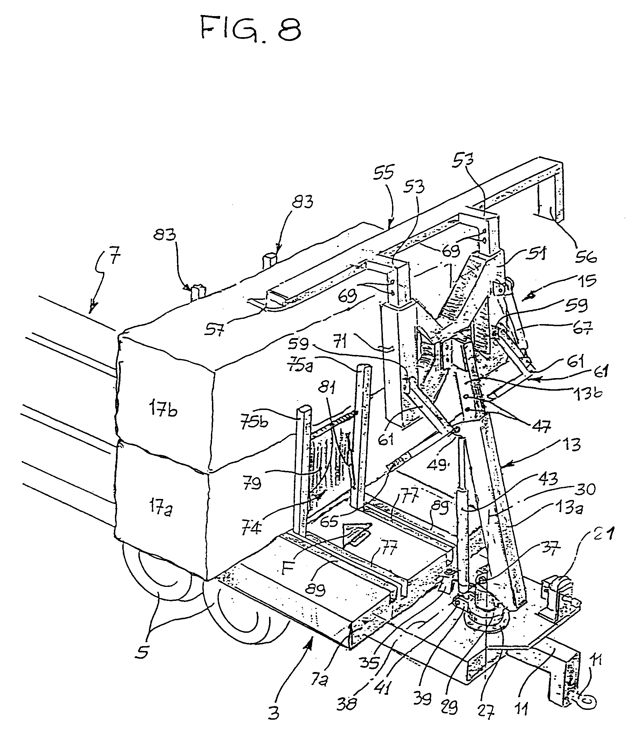

With reference to figure 8, when two bales 17a and 17b have been loaded, superimposed onto each other, there is no space left to load further bales. The pushing member 74 is then operated by jacks 82, as explained in the foregoing, so as to cause the previously loaded bales 17a and 17b to move rearwardly towards the rear end 7b of platform 7. The L-shaped support elements 83 are kept in the new position partially because of the load resting thereon and partially because of the action of chains 91 which are locked in the new position by L-shaped elements 83.

Uprights 75 and 75b are then again advanced in the original loading position by operating jacks 82 so as to locate again the uprights at the front end 7 of platform 7

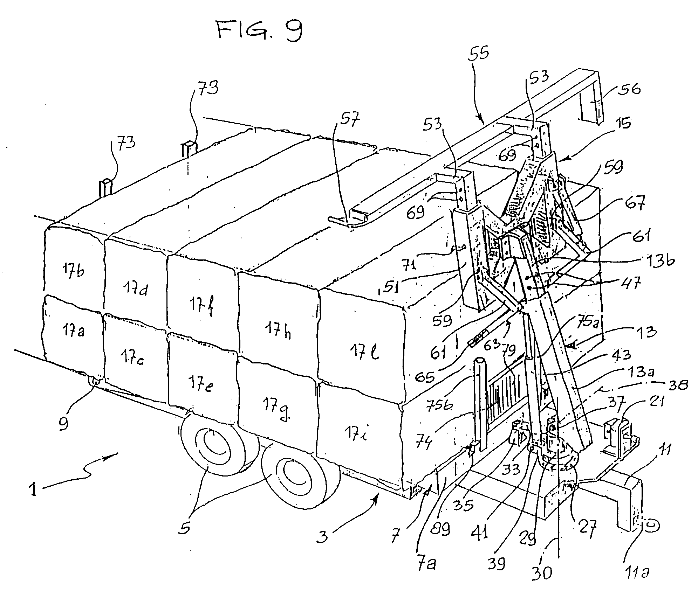

In this way, it is possible to load in sequence a number of pairs of bales, as shown in figure 9 and indicated by reference numerals 17a-17l.

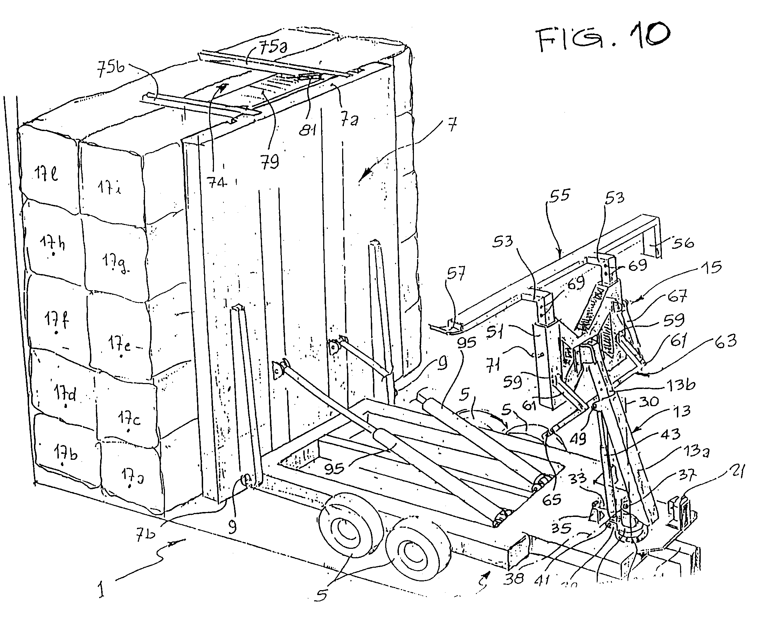

Once loading of platform 7 has been completed, the tractor attends to transfer the trailer 1 to a stocking place in which all the loaded straw bales will be simultaneously unloaded by rotating platform 7 around articulation 9 as a result of the pushing action generated by a pair of jacks 95 whose ends are respectively articulated to frame 3 and platform 7 (figure 10). Each stage of the movement of arm 13 during the loading operation of the bale can be carried out individually by operating a respective hydraulic jack through the levers associated with unit 19, or by operating a push bottom which causes the automatic operation of a sequence of various stages according to a predetermined sequence.

Naturally, the principles of the invention remaining the same, the embodiments and the construction details can be varied widely without departing from the scope of the present invention as defined by the claims.

## Claims

1. Machine for loading and unloading square bales, particularly giant square bales, of hay and the like, which machine comprises:
a wheeled vehicle having a frame (3) carrying a loading platform (7) which is tiltable between a lowered position for receiving the bales and a raised position for unloading the loaded bales, said vehicle further having:
pushing means (74) associated with the platform (7), adapted to move a plurality of loaded bales parallel to the platform from the loading end of the platform towards the opposite end thereof,
loading means (13, 15) for picking up a bale from the ground and to release the bale on the platform (7), characterized in that said loading means comprises a movable arm (13) having one end articulated to the frame (3) of the vehicle around a first upright axis (30) which is substantially perpendicular to the platform (7) and a second axis (38) orthogonal to said first axis, whose opposite end carries a grasping clamp (15),
driving means (19, 21) for driving said pushing means (74) and said loading means (13, 15), adapted to drive said movable arm (13), so as to cause the latter to take in sequence the following positions at any loading cycle:
a first substantially horizontal position for grasping a bale (17a) to be loaded, resting on the ground and arranged with its general axis substantially parallel to the longitudinal axis of the vehicle,
a second substantially vertical position, rotated with respect to said first position around said second axis (38), in which the bale (17a) is raised and is parallel with respect to its initial position on the ground,
a third position rotated with respect to said second position around said first axis (30), in which the bale (17a) takes an orientation in which its general axis is arranged transverse to the longitudinal axis of the vehicle.

2. Machine according to claim 1, characterized in that said driving means also cause the movable arm (13), to take, at any loading cycle, a final unloading position, rotated with respect to said third position around said second axis (38), in which the bale (17a) is arranged on the vertical of a space free for loading.

3. Machine according to claim 1, characterized in that said grasping clamp (15) comprises a support structure (51) rigidly connected to said movable arm (13) and carrying a substantially L-shaped abutment member (55) and in that to this support structure (51) there is associated a jaw (63) which is pivotally mounted onto said abutment member (55) between a first closed configuration for grasping a bale (17a) and a second spaced apart configuration for releasing a grasped bale (17a).

4. Machine according to claim 3, characterized in that the movable arm (13) and the jaw (63) are hydraucally driven.

5. Machine according to claim 4, characterized in that the movable arm (13) is of a telescopically extendable type.

6. Machine according to claim 5, characterized in that the lengthening of arm 13 is manually adjustable.

7. Machine according to claim 5, characterized in that the lengthening of the movable arm (13) is driven hydraulically.

8. Machine according to claim 3, characterized in that the distance between the support structure (51) and the abutment member (55) is manually adjustable.

9. Machine according to any of the previous claims, characterized in that said pushing means (74) comprise a hydraulically operated pushing member (75a, 75 b, 76) able to move at least a pair of superimposed bales from the loading end (7a) of the platform (7), along the longitudinal direction of the platform through a distance corresponding to the size of a bale.

10. Machine according to any of the previous claims, characterized in that a control unit (19) controls activation of a sequence of loading operations of a bale (17a).

11. Method for loading and unloading square bales, particularly giant square bales, of hay and the like, which comprises the following operations:
providing a wheeled vehicle having a frame (3) carrying a loading platform (7) which is tiltable between a lowered position for receiving the bales and a raised position for unloading the loaded bales, to which platform there are associated pushing means (74) adapted to move a plurality of loaded bales parallel to the platform towards the opposite end (7b) thereof, loading means (13, 15) adapted to pick up a bale (17a) from the ground and to release the latter onto the platform (7), comprising a movable arm (13), having one end articulated to the frame (7) of the vehicle around a first upright axis (30) which is substantially perpendicular to the platform and a second axis (38) orthogonal to the first axis, whose opposite end carries a grasping clamp (15) and driving means (19, 21) for driving said pushing means (74) and said loading means (13, 15),
driving said movable arm (13) so that it takes in sequence:
a first substantially horizontal position for grasping a bale (17a) to be loaded resting on the ground with its general axis substantially parallel to the longitudinal axis of the vehicle,
a second substantially vertical position rotated with respect to said first position around said second axis (38), in which the bale (17a) is raised parallel with respect to its initial position on the ground,
a third position rotated with respect to said second position around said first axis (30), in which the bale (17a) takes an orientation in which its general axis is arranged transverse to the longitudinal axis of the vehicle.

## Patentansprüche

1. Maschine zum Auf- und Abladen viereckiger Ballen aus Heu und dergleichen, wobei die Maschine umfaßt:
ein mit Rädern versehenes Fahrzeug mit einem Gestell (3), das eine Ladeplattform (7) trägt, die zwischen einer abgesenkten Position zur Aufnahme der Ballen und einer angehobenen Position zum Abladen der aufgeladenen Ballen gekippt werden kann, wobei das Fahrzeug des weiteren aufweist:
eine Schiebeeinrichtung (74), die mit der Plattform (7) verbunden ist und eine Vielzahl aufgeladener Ballen parallel zu der Plattform vom Aufladeende der Plattform auf das gegenüberliegende Ende derselben zu bewegt,
eine Aufladeeinrichtung (13,15), die einen Ballen vom Boden anhebt und den Ballen auf der Plattform (7) ablegt, dadurch gekennzeichnet, daß die Aufladeeinrichtung einen beweglichen Arm (13) umfaßt, dessen eines Ende um eine erste aufrechte Achse (30), die im wesentlichen senkrecht zu der Plattform (7) ist, und um eine zweite Achse (38) rechtwinklig zu der ersten Achse gelenkig an dem Gestell (3) des Fahrzeugs angebracht ist und dessen gegenüberliegendes Ende eine Greifklemme (15) trägt,
eine Antriebseinrichtung (19,21), die die Schiebeeinrichtung (74) und die Aufladeeinrichtung (13,15) antreibt, die den beweglichen Arm (13) so antreibt, daß bewirkt wird, daß letzterer nacheinander die folgenden Positionen in jedem Aufladezyklus einnimmt:
eine erste, im wesentlichen horizontale Position zum Ergreifen eines aufzuladenden Ballens (17a), der auf dem Boden liegt und so angeordnet ist, daß seine allgemeine Achse im wesentlichen parallel zur Längsachse des Fahrzeugs ist,
eine zweite, im wesentlichen vertikale Position, die gegenüber der ersten Position um die zweite Achse (38) herum gedreht ist und in der der Ballen (17a) angehoben und parallel zu seiner Ausgangsposition auf dem Boden ist,
eine dritte Position, die gegenüber der zweiten Position um die erste Achse (30) herum gedreht ist und in der der Ballen (17a) eine Ausrichtung einnimmt, in der seine allgemeine Achse quer zur Längsachse des Fahrzeugs angeordnet ist.

2. Maschine nach Anspruch 1, **dadurch gekennzeichnet**, daß die Antriebseinrichtung auch bewirkt, daß der bewegliche Arm (13) in jedem Aufladezyklus eine abschließende Abladeposition einnimmt, die gegenüber der dritten Position um die zweite Achse (38) herum gedreht ist und in der der Ballen (17a) auf der Vertikalen eines freien Raums zum Aufladen angeordnet ist.

3. Maschine nach Anspruch 1, **dadurch gekennzeichnet**, daß die Greifklemme (15) eine Tragestruktur (51) umfaßt, die starr mit dem beweglichen Arm (13) verbunden ist und ein im wesentlichen L-förmiges Anliegeelement (55) trägt, und dadurch, daß mit dieser Tragestruktur (51) eine Klaue (63) verbunden ist, die zwischen einer ersten geschlossenen Stellung zum Ergreifen eines Ballens (17a) und einer zweiten beabstandeten Stellung zum Freigeben eines ergriffenen Ballens (17a) schwenkbar an dem Anliegeelement (55) angebracht ist.

4. Maschine nach Anspruch 3, **dadurch gekennzeichnet**, daß der bewegliche Arm (13) und die Klaue (63) hydraulisch gesteuert werden.

5. Maschine nach Anspruch 4, **dadurch gekennzeichnet**, daß der bewegliche Arm (13) teleskopartig ausgefahren werden kann.

6. Maschine nach Anspruch 5, **dadurch gekennzeichnet**, daß die Verlängerung von Arm (13) manuell eingestellt werden kann.

7. Maschine nach Anspruch 5, **dadurch gekennzeichnet**, daß die Verlängerung des beweglichen Arms (13) hydraulisch gesteuert wird.

8. Maschine nach Anspruch 3, **dadurch gekennzeichnet**, daß der Abstand zwischen der Tragestruktur (51) und dem Anliegeelement (55) manuell eingestellt werden kann.

9. Maschine nach einem der vorangehenden Ansprüche, **dadurch gekennzeichnet**, daß die Schiebeeinrichtung (74) ein hydraulisch betätigtes Schiebeelement (75a,75b,76) umfaßt, das wenigstens ein Paar übereinanderliegender Ballen vom Aufladeende (7a) der Plattform (7) in der Längsrichtung der Plattform über einen Abstand bewegen kann, der der Größe eines Ballens entspricht.

10. Maschine nach einem der vorangehenden Ansprüche, **dadurch gekennzeichnet**, daß eine Steuereinheit (19) die Auslösung einer Abfolge von Vorgängen zum Aufladen eines Ballens (17a) steuert.

11. Verfahren zum Auf- und Abladen viereckiger Ballen, insbesondere sehr großer viereckiger Ballen aus Heu und dergleichen, das die folgenden Vorgänge umfaßt:
Bereitstellen eines mit Rädern versehenen Fahrzeugs mit einem Gestell (3), das eine Ladeplattform (7) trägt, die zwischen einer abgesenkten Position zur Aufnahme der Ballen und einer angehobenen Position zum Abladen der aufgeladenen Ballen gekippt werden kann, wobei mit der Plattform eine Schiebeeinrichtung (74) verbunden ist, die eine Vielzahl aufgeladener Ballen parallel zur Plattform auf das gegenüberliegende Ende (7b) derselben zu bewegt, mit einer Aufladeeinrichtung (13,15), die einen Ballen (17a) vom Boden anhebt und letzteren auf die Plattform (7) ablegt, die einen beweglichen Arm (13) umfaßt, dessen eines Ende um eine erste aufrechte Achse (30), die im wesentlichen senkrecht zur Plattform ist, und eine zweite Achse (38) rechtwinklig zur ersten Achse gelenkig an dem Gestell (3) des Fahrzeugs angebracht ist und dessen gegenüberliegendes Ende eine Greifklemme (15) trägt, sowie mit einer Antriebseinrichtung (19,21), die die Schiebeeinrichtung (74) und die Aufladeeinrichtung (13,15) antreibt,
das Antreiben des beweglichen Arms (13), so daß er nacheinander einnimmt:
eine erste, im wesentlichen horizontale Position zum Ergreifen eines aufzuladenden Ballens (17a), der auf dem Boden liegt, wobei seine allgemeine Achse im wesentlichen parallel zur Längsachse des Fahrzeugs ist,
eine zweite, im wesentlichen vertikale Position, die gegenüber der ersten Position um die zweite Achse (38) herum gedreht ist und in der der Ballen (17) parallel zu seiner Ausgangsposition auf dem Boden angehoben ist,
eine dritte Position, die gegenüber der zweiten Position um die erste Achse (30) herum gedreht ist und in der der Ballen (17a) eine Ausrichtung einnimmt, in der seine allgemeine Achse quer zur Längsachse des Fahrzeugs angeordnet ist.

## Revendications

1. Machine de chargement et de déchargement de balles parallélépipédiques, et notamment de balles parallélépipédiques géantes, de foin ou analogues, la machine comprenant :
un véhicule sur roues ayant un châssis (3) portant une plate-forme (7) de chargement qui peut pivoter entre une position abaissée pour la réception des balles et une position levée pour le déchargement des balles chargées, le véhicule ayant en outre :
un dispositif de poussée (74) associé à la plate-forme (7) et destiné à déplacer plusieurs balles chargées parallèlement à la plate-forme de l'extrémité de chargement de la plate-forme vers son extrémité opposée,
un dispositif (13, 15) de chargement destiné à prélever une balle sur le sol et à la relâcher sur la plate-forme (7), caractérisée en ce que le dispositif de chargement comporte un bras mobile (13) dont une première extrémité est articulée sur le châssis (3) du véhicule autour d'un premier axe vertical (30) qui est pratiquement perpendiculaire à la plate-forme (7) et un second axe (38) perpendiculaire au premier axe et dont l'extrémité opposée porte une pince (15) de saisie,
un dispositif (19, 21) d'entraînement du dispositif de poussée (74) et du dispositif de chargement (13, 15), destiné à entraîner le bras mobile (13) afin que celui-ci prenne successivement les positions suivantes dans un cycle quelconque de chargement :
une première position pratiquement horizontale de saisie d'une balle (17a) à charger, reposant sur le sol et disposée avec son axe général sensiblement parallèle à l'axe longitudinal du véhicule,
une seconde position pratiquement verticale, après rotation par rapport à la première position autour du second axe (38), la balle (17a) étant soulevée et étant parallèle à sa position initiale au sol, et
une troisième position, après rotation autour du premier axe (30) par rapport à la seconde position, dans laquelle la balle (17a) prend un orientation telle que son axe général est placé transversalement à l'axe longitudinal du véhicule.

2. Machine selon la revendication 1, caractérisée en ce que le dispositif d'entraînement provoque aussi la mise du bras mobile (13), dans un cycle quelconque de chargement, à une position finale de déchargement, après rotation autour du second axe (38) par rapport à la troisième position, et dans laquelle la balle (17a) est placée à la verticale d'un espace libre pour le chargement.

3. Machine selon la revendication 1, caractérisée en ce que la pince (15) de saisie comporte une structure (51) de support raccordée rigidement au bras mobile (13) et portant un organe de butée (55) ayant pratiquement une forme en L, et dans laquelle une mâchoire (63) est associée à cette structure de support (51) et est montée afin qu'elle puisse pivoter sur l'organe de butée (55) entre une première configuration de fermeture pour la saisie d'une balle (17a) et une seconde configuration espacée pour la libération d'une balle saisie (17a).

4. Machine selon la revendication 3, caractérisée en ce que le bras mobile (13) et la mâchoire (63) sont commandés hydrauliquement.

5. Machine selon la revendication 4, caractérisée en ce que le bras mobile (13) est d'un type qui peut s'allonger télescopiquement.

6. Machine selon la revendication 5, caractérisée en ce que l'allongement du bras (13) est réglable manuellement.

7. Machine selon la revendication 5, caractérisée en ce que l'allongement du bras mobile (13) est assuré hydrauliquement.

8. Machine selon la revendication 3, caractérisée en ce que la distance comprise entre la structure de support (51) et l'organe de butée (55) est réglable manuellement.

9. Machine selon l'une quelconque des revendications précédentes, caractérisée en ce que le dispositif de poussée (74) est un organe hydraulique de poussée (75a, 75b, 76) qui peut déplacer au moins une paire de balles superposées depuis l'extrémité de chargement (7a) de la plate-forme (7) dans la direction longitudinale de la plate-forme sur une distance correspondant à la dimension d'une balle.

10. Machine selon l'une quelconque des revendications précédentes, caractérisée en ce qu'une unité (19) commande l'activation d'une séquence d'opérations de chargement d'une balle (17a).

11. Procédé de chargement et de déchargement de balles parallélépipédiques notamment de balles parallélépipédiques géantes, formées de foin ou analogues, comprenant les opérations suivantes :
la disposition d'un véhicule à roues ayant un châssis (3) portant une plate-forme de chargement (7) qui peut pivoter entre une position abaissée de réception des balles et une position levée de déchargement des balles chargées, un dispositif de poussée (74) étant associé à la plate-forme et étant destiné à déplacer plusieurs balles chargées parallèlement à la plate-forme vers l'extrémité opposée (7b) de celle-ci, un dispositif de chargement (13, 15) destiné à prélever une balle (17a) sur le sol et à la relâcher sur la plate-forme (7), ce dispositif comprenant un bras mobile (13) ayant une première extrémité articulée sur le châssis (7) du véhicule autour d'un premier axe vertical (30) qui est pratiquement perpendiculaire à la plate-forme, et un second axe (38) perpendiculaire au premier axe, l'extrémité opposée du bras portant une pince de saisie (15) et un dispositif (19, 21) d'entraînement du dispositif de poussée (74) et du dispositif de chargement (13, 15),
l'entraînement du bras mobile (13) afin qu'il prenne successivement :
une première position pratiquement horizontale destinée à la saisie d'une balle (17a) qui doit être chargée et qui repose sur le sol avec un axe général pratiquement parallèle à l'axe longitudinal du véhicule,
une seconde position pratiquement verticale, après rotation par rapport à la première position autour du second axe (38), la balle (17a) étant soulevée parallèlement à sa position initiale au sol, et
une troisième position, après rotation par rapport à la seconde position autour du premier axe (30), dans laquelle la balle (17a) a une orientation telle que son axe général est transversal à l'axe longitudinal du véhicule.
